# EUROPÄISCHE PATENTSCHRIFT

(11) **EP 1 096 068 B1**
(45) Veröffentlichungstag und Bekanntmachung des Hinweises auf die Patenterteilung: **29.09.2004**
(21) Anmeldenummer: 00115934.2
(22) Anmeldetag: 25.07.2000
(51) Int. Cl.: D21G 1/02

(54) **Elastische Walze sowie Verfahren zur Herstellung einer solchen Walze**
Soft roll and process for making such a roll
Rouleau élastique et procédé pour la fabrication d' un tel rouleau

(30) Priorität: 29.10.1999 DE 19952320
(43) Veröffentlichungstag der Anmeldung: 02.05.2001
(73) Patentinhaber: Voith Paper Patent GmbH, 89522 Heidenheim (DE)
(72) Erfinder: Sohl, Carsten, 7000 Fredericia (DK)
(74) Vertreter: Manitz, Finsterwald & Partner GbR

(56) Entgegenhaltungen:
- EP-A- 1 041 197
- WO-A-98/54405

## Beschreibung

Die vorliegende Erfindung betrifft ein Verfahren zum Herstellen einer elastischen Walze mit einem insbesondere aus Metall bestehenden harten Walzenkern und einer elastischen Bezugsschicht, bei dem zum Bilden der Bezugsschicht ein aus einer Vielzahl von Fasern bestehendes Faserbündel zum Bilden übereinanderliegender Faserschichten auf den Walzenkern gewickelt wird, wobei die Wickelrichtung der Fasern im wesentlichen parallel zueinander und schräg zur Umfangsrichtung des Walzenkerns verläuft. Weiterhin ist die Erfindung auf eine Walze, insbesondere zum Glätten von Papierbahnen, gerichtet mit einem insbesondere aus Metall bestehenden harten Walzenkern, der an seiner Außenseite mit einer elastischen Bezugsschicht versehen ist, die eine Vielzahl von radial übereinanderliegenden, aus einem weichen Matrixmaterial mit darin eingebetteten Fasern bestehenden Faserschichten umfaßt (WO-A-9 854 405).

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere an die elastischen Bezugsschichten Walzen höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen werden Nipfrequenzen, das sind die Frequenzen, mit denen der Bezug komprimiert und wieder entlastet wird, erreicht, die zu Resonanzen im Walzenmantel bzw. in den Walzen führen.

Diese Resonanzen führen zu Schwingungen der Kalanderwalzen, die nach einer gewissen Laufzeit zu Querstreifen senkrecht zur Produktionsrichtung, sogenannten "Barrings", in der Oberfläche der Bezugsschicht der Walzen führen. Diese Querstreifen können typischerweise eine Breite von 3 bis 10 mm in Umfangsrichtung und einen Abstand von 5 bis 10 mm besitzen.

Verursacht werden die Schwingungen durch Ungleichmäßigkeiten, die beispielsweise durch ungleichen Stoffauflauf, Ungleichmäßigkeiten im Walzenantrieb oder durch sonstige Ungleichmäßigkeiten im Walzenlauf bedingt sein können. Die Querstreifen in der Bezugsschicht können dabei sowohl durch plastische Verformungen des Matrixmaterials als auch durch ungleichmäßigen Abrieb entstehen. Letztlich führen diese Querstreifen in der Bezugsschicht zu entsprechenden Abdrücken auf der kalandrierten Papierbahn, so daß die Qualität der Papierbahn ungenügend ist.

Die Querstreifen in der Bezugsschicht der Walze müssen durch ein Abschleifen der Bezugsschicht beseitigt werden, wodurch die Lebensdauer der Walzenbezüge deutlich verringert wird.

Es ist eine Aufgabe der Erfindung, ein Verfahren zum Herstellen einer elastischen Walze sowie eine entsprechende elastische Walze anzugeben, bei denen das Auftreten von Barrings vermieden wird.

Der das Verfahren betreffende Teil der Aufgabe wird erfindungsgemäß ausgehend von einem Verfahren der eingangs genannten Art dadurch gelöst, daß zur Bildung einer Kreuzverbundschicht zumindest zwei übereinanderliegende Faserschichten alternierend gegengleich gewickelt werden, d.h. daß die Winkellagen der Faserbündel zweier gegengleich gewickelter Faserschichten zur Längsachse der Walze symmetrisch zur Querschnittsfläche der Walze sind, daß auf die Kreuzverbundschicht eine Dämpfungsfaserschicht mit Faserbündeln einer einheitlichen Winkellage gewickelt wird, wobei die Winkellage dieser Faserbündel wesentlich flacher ist als die Winkellagen der Faserbündel der Kreuzverbundschicht, und daß auf die Dämpfungsfaserschicht wiederum eine Kreuzverbundschicht gewickelt wird.

Eine ernndungsgemäße ausgebildete Walze ist dadurch gekennzeichnet, daß die Fasern der Faserschichten jeweils schräg zur Längsachse des Walzenkerns und im wesentlichen parallel zueinander verlaufen, daß jeweils zumindest zwei übereinanderliegende Faserschichten eine Kreuzverbundschicht bilden, wobei die Fasern der einzelnen Faserschichten jeweils alternierend gegengleich verlaufen, d.h. daß die Winkellagen der Fasern zur Längsachse des Walzenkerns symmetrisch zur Querschnittsfläche der Walze sind, daß die Bezugsschicht zumindest zwei Kreuzverbundschichten umfaßt, und daß zwischen den Kreuzverbundschichten eine Dämpfungsfaserschicht mit Fasern einer einheitlichen Winkellage vorgesehen ist, wobei die Winkellage dieser Fasern wesentlich flacher ist als die Winkellagen der Fasern der Kreuzverbundschichten.

Erfindungsgemäß wird somit das Auftreten von Barrings durch eine spezielle Wickeltechnik vermieden. Die mit der erfindungsgemäßen Wickeltechnik hergestellten Walzen besitzen die Eigenschaft, daß eine Schwingung der Walze durch spezielle Dämpfungsfaserschichten innerhalb der Bezugsschicht vermieden wird. Während die jeweils gegengleich gewickelte Faserschichten umfassenden Kreuzverbundschichten einen relativ niedrigen E-Modul besitzen, weisen die jeweils in einer einheitlichen Winkellage gewickelten Dämpfungsfaserschichten eine sehr hohe Steifigkeit auf, wobei aufgrund der sehr flachen Winkellage der Faserbündel auf die Bezugsschicht wirkende Druckkräfte als Torsion an die Bezugsschicht weitergegeben werden. Auf diese Weise erfolgt bei Druckbeaufschlagung eine minimale Torsion der Bezugsschicht, wodurch Schwingungen in der Bezugsschicht und damit das Auftreten von Barrings vermieden wird. Die im Betrieb beispielsweise aufgrund von Ungleichmäßigkeiten im Stoffauflauf oder von Ungleichmäßigkeiten im Antrieb auftretenden Stöße werden somit durch die speziell ausgebildeten Dämpfungsfaserschichten aufgefangen.

Nach einer vorteilhaften Ausführungsform der Erfindung wird zur Bildung jeweils einer der Faserschichten der Kreuzverbundschichten das Faserbündel mehrlagig mit einer im wesentlichen einheitlichen Winkellage auf den Walzenkern gewickelt. Die Faserschichten der Kreuzverbundschichten sind somit jeweils mehrlagig ausgebildet, d.h. sie umfassen jeweils mehrere übereinander gewickelte Lagen von Fasern einer im wesentlichen einheitlichen Winkellage. Auf diese Weise wird die erforderliche Dicke und damit die erforderliche Elastizität der Bezugsschicht erreicht.

Zumindest zwei oder mehrere dieser bevorzugt mehrlagigen, eine einheitliche Winkellage aufweisenden Faserschichten werden dann jeweils zu einer Kreuzverbundschicht zusammengefaßt. Durch die gegengleiche Wicklung der einzelnen Faserschichten innerhalb einer Kreuzverbundschicht wird eine hohe Steifigkeit der Bezugsschicht erreicht.

Bevorzugt wird zur Bildung der Dämpfungsfaserschicht das Faserbündel einlagig auf den Walzenkern gewickelt. Die Dämpfungsfaserschichten sind dadurch wesentlich dünner ausgebildet als die Kreuzverbundschichten, so daß die Steifigkeit der Bezugsschicht nicht nachteilig reduziert wird. Trotzdem wird bei einer Druckbeaufschlagung durch die nicht im Kreuzverbund, sondern in einer einheitlichen Winkellage gewickelten dünnen Dämpfungsfaserschichten erreicht, daß die Schwingungen in der Bezugsschicht und damit das Auftreten von Barrings vermieden wird.

Einlagig bedeutet im Sinne der vorliegenden Erfindung, daß beim Wickeln der Dämpfungsfaserschicht das Faserbündel solange auf den Walzenkern aufgewickelt wird, bis die darunterliegende Kreuzverbundschicht vollständig bedeckt ist. Anschließend kann das Faserbündel am Walzenende beispielsweise abgeschnitten werden.

Nach einer weiteren vorteilhaften Ausführungsform der Erfindung werden mehrere Kreuzverbundschichten und Dämpfungsfaserschichten übereinander gewickelt, wobei jeweils auf eine Kreuzverbundschicht eine Dämpfungsfaserschicht folgt. Grundsätzlich können eine Vielzahl von entsprechenden Schichten vorgesehen sein, wobei bevorzugt als radial äußerste Schicht eine Kreuzverbundschicht gewickelt wird.

Insbesondere wenn die Faserbündel zweier aufeinanderfolgender Dämpfungsfaserschichten gegengleich gewickelt werden, besitzt die Bezugsschicht optimale Dämpfungseigenschaften, da die jeweilige Torsion der beiden aufeinanderfolgenden Dämpfungsfaserschichten entgegengesetzt gerichtet ist, so daß sich über die gesamte Bezugsschicht die auftretenden Torsionen gegenseitig aufheben. Die Oberfläche der elastischen Bezugsschicht bleibt auf diese Weise torsionsfrei.

Vorteilhaft werden die Dämpfungsfaserschichten mit einer wesentlich kleineren radialen Dicke gewickelt als die Kreuzverbundschichten. Die Dämpfungsfaserschichten besitzen auf diese Weise einen sehr hohen E-Modul, wodurch die Umsetzung der auf die Bezugsschicht wirkenden radialen Stöße in eine Torsionsbewegung weiter verbessert wird.

Nach einer weiteren bevorzugten Ausführungsform der Erfindung werden radial außenliegende Kreuzverbundschichten mit einer steileren Winkellage gewickelt als radial innenliegende Kreuzverbundschichten. Durch diese nach außen ansteigenden Winkellagen wird ein optimales Wärmeausdehnungverhalten der erfindungsgemäßen Walze erreicht. Beispielsweise kann eine radial innenliegende Kreuzverbundschicht mit einer Winkellage von ± 45°, eine darauffolgende Dämpfungsfaserschicht mit einer Winkellage von + 8°, eine weitere Kreuzverbundschicht mit einer Winkellage von ± 65°, eine weitere Dämpfungsfaserschicht mit - 8° und schließlich eine weitere Kreuzverbundschicht mit einer Winkellage von ± 75° gewickelt werden. Dabei werden bevorzugt die Dämpfungsfaserschichten deutlich dünner gewickelt als die Kreuzverbundschichten

Nach einer weiteren vorteilhaften Ausführungsform der Erfindung werden zum Bilden der Bezugsschicht zunächst eine radial innenliegende Verbindungsschicht auf den Walzenkern und anschließend eine radial ausliegenden Funktionsschicht auf die Verbindungsschicht aufgebracht. Durch die Trennung in Verbindungsschicht und Funktionsschicht können die jeweiligen erforderlichen physikalischen Eigenschaften der beiden Schichten optimal eingestellt werden. Beispielsweise soll üblicherweise die außenliegende Funktionsschicht eine hohe Elastizität besitzen, während die innenliegende Verbindungsschicht eine hohe Steifigkeit aufweisen soll. Um die Wärmeleitfähigkeit der Bezugsschicht und damit die Abführung von unerwünschter Hitze aus der Bezugsschicht zu verbessern, werden Fasermaterialien verwendet, die eine höhere Leitfähigkeit besitzen als das verwendete Matrixmaterial. Zusätzlich können in dem elastischen Matrixmaterial Füllstoffe eingebettet sein, die ebenfalls eine höhere Wärmeleitfähigkeit besitzen als das Matrixmaterial.

Zur Herstellung der Walze werden bevorzugt die Fasern vor dem Aufwikkeln auf dem Walzenkern mit einem weichen Matrixmaterial, insbesondere einer Harz/Härter-Kombination umgeben. Dies kann beispielsweise dadurch erfolgen, daß die Fasern durch ein Harz/Härter-Bad gezogen werden. Die Fasern können jedoch auch grundsätzlich im wesentlichen trokken auf den Walzenkern aufgewickelt werden und während oder nach dem Aufwickeln mit einem weichen Matrixmaterial, insbesondere mit einer Harz/Härter-Kombination beaufschlagt, insbesondere vollständig in das Matrixmaterial eingebettet werden.

Die Faserschichten können durch Wickeln von Einzelfasern, von Faserbündeln oder Faserrovings gebildet werden, wobei im Sinne der vorliegenden Anmeldung eine Faserschicht sowohl einlagig, d.h. einfach gewickelt, als auch mehrlagig, d.h. mehrfach gewickelt, sein kann.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher beschrieben; in diesen zeigen:
- Fig. 1 bis 5: verschiedene Zustände einer erfindungsgemäß ausgebildeten Walze bei deren Herstellung und
- Fig. 6: einen Teillängsschnitt durch eine erfindungsgemäß ausgebildete Walze.

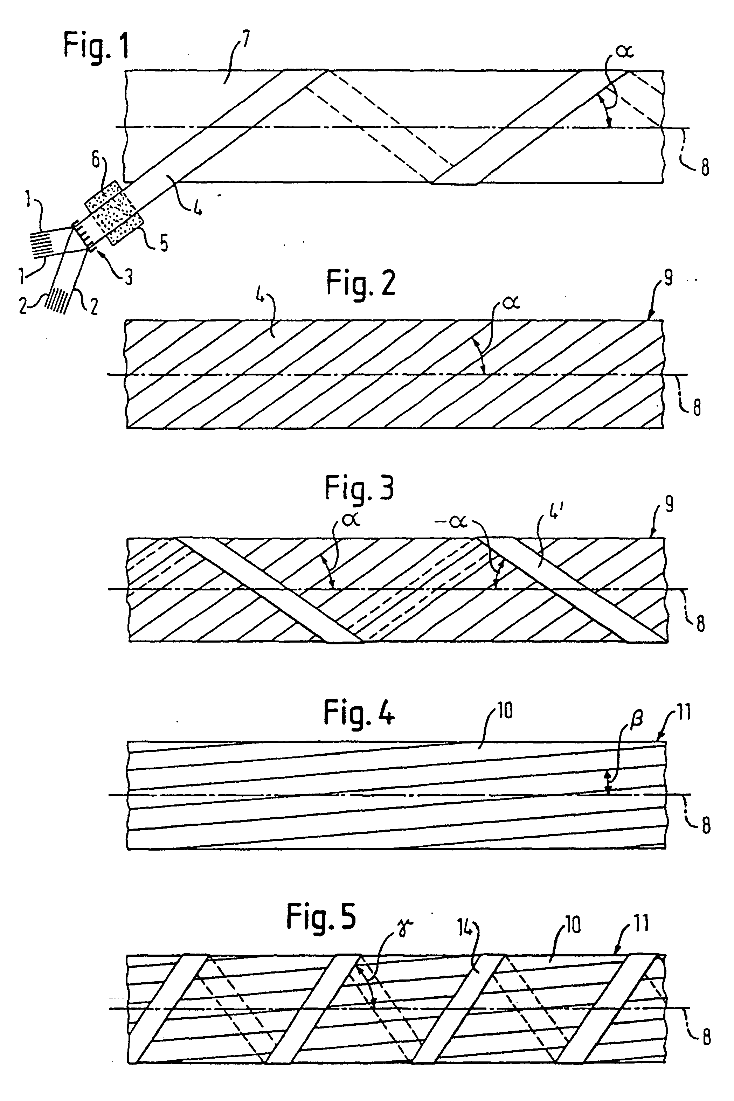

In Fig. 1 ist dargestellt, wie unterschiedliche Fasern 1, 2, beispielsweise Glas-, Kohle- und Aramidfasern, über eine kammartige Sammeleinheit 3 geführt und zu einem Faserbündel 4 zusammengefaßt werden. Dabei wird das Faserbündel 4 durch eine schematisch dargestellte Imprägniervorrichtung 5 geführt, in der die einzelnen Fasern 1, 2 mit einem flüssigen Matrixmaterial 6 beschichtet werden, so daß sie im wesentlichen vollständig von dem Matrixmaterial 6 umschlossen sind. Bei dem Matrixmaterial kann es sich dabei um einen Kunststoff, insbesondere um eine Harz/ Härter-Kombination handeln. Anstelle von unterschiedlichen Fasern 1, 2 können auch einheitliche Fasern zur Bildung des Faserbündels 4 verwendet werden.

Das mit dem Matrixmaterial 6 vollständig beschichtete Faserbündel 4 wird auf einen Walzenkern 7 schräg aufgewickelt, so daß es einen Winkel α gegenüber der Längsachse 8 des Walzenkerns 7 einschließt. Der Wickelvorgang wird über die gesamte Länge des Walzenkerns 7 durchgeführt, bis an dem nicht dargestellten Ende des Walzenkerns 7 das Faserbündel 4 über einen Wickelkern geführt und in der entgegengesetzten Richtung zurückgeführt wird. Bevorzugt wird das Faserbündel 4 dabei so geführt, daß es Stoß an Stoß an dem zuvor gewickelten Faserbündel 4 anliegt.

Dieser Wickelvorgang wird so lange wiederholt, bis der Walzenkern 7 vollständig von dem Faserbündel 4 umwickelt ist. Wahlweise kann dabei der Wickelvorgang nach einer einlagigen vollständigen Umwicklung oder nach einer wiederholten mehrmaligen Umwicklung beendet werden. Durch das Faserbündel 4 und das das Faserbündel 4 umhüllende Matrixmaterial 6 wird eine in Fig. 2 dargestellte, geschlossene erste Faserschicht 9 gebildet, deren Fasern 1, 2 alle im wesentlichen den gleichen Winkel α gegenüber der Längsachse des Walzenkerns 7 einschließen. Der Winkel α kann dabei beispielsweise +45° betragen und die Dicke der Faserschicht 9 kann bevorzugt ca. 1 mm betragen.

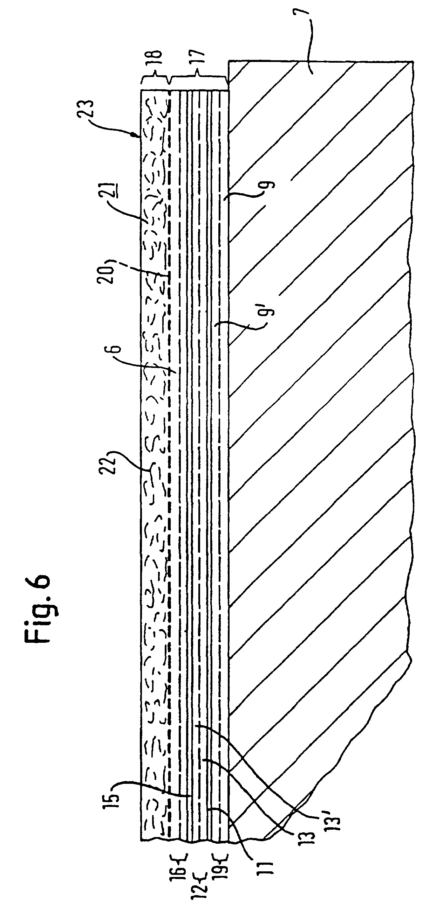

Im nächsten Beschichtungsschritt wird ein weiteres Faserbündel 4' auf die erste Faserschicht 9 aufgewickelt, wobei das Faserbündel 4' gegengleich zum dem Faserbündel 4 in einem Winkel -α gegenüber der Längsachse 8 auf den Walzenkern 7 aufgewickelt wird, bis die erste Faserschicht 9 vollständig von einer weiteren Faserschicht 9' (Fig. 6) überdeckt ist. Die beiden im wesentlichen die gleiche radiale Dicke aufweisenden, gegengleich gewickelten Faserschichten 9, 9' bilden eine Kreuzverbundschicht 19 (Fig. 6). Während in Fig. 6 die Kreuzverbundschicht 19 nur aus den beiden gegengleich gewickelten Faserschichten 9, 9' besteht, können im Sinne der vorliegenden Erfindung die Kreuzverbundschichten auch aus mehr als zwei gegengleich gewickelten Faserschichten bestehen.

Nach Aufbringen der beiden innenliegenden, gegengleich gewickelten Faserschichten 9, 9' wird in einem nächsten Verfahrensschritt ein weiteres Faserbündel 10 auf die Faserschicht 9' aufgewickelt, wobei das Faserbündel 10 einen Winkel β gegenüber der Längsachse 8 einschließt, der deutlich kleiner ist als der Winkel a. Weiterhin wird die durch das Wickeln der Faserbündel 10 entstehende, eine Dämpfungsfaserschicht 11 (Fig. 6) bildende Faserschicht mit einer deutlich geringeren radialen Dicke gewickelt als die Faserlagen 9, 9'. Typische Werte für die Dämpfungsfaserschicht 11 können beispielsweise 0,1 bis 0,5 mm betragen. Bevorzugt wird die Dämpfungsfaserschicht 11 einlagig gewickelt, um eine möglichst minimale radiale Dicke zu erreichen. Grundsätzlich ist auch eine mehrlagige Wicklung mit einem einheitlichen Wickelwinkel β möglich, solange die resultierende radiale Dicke der Dämpfungsfaserschicht 11 klein genug bleibt.

Während die Dämpfungsfaserschicht 11 lediglich aus in einer Richtung gewickelten Faserbündeln 10 besteht, wird auf die Dämpfungsfaserschicht 11 wiederum eine Kreuzverbundschicht 12 (Fig. 6) gewickelt, die wie die Kreuzverbundschicht 19 aus zwei oder mehreren gegengleich gewickelten Faserschichten 13, 13' besteht.

Die Faserschichten 13, 13' werden dabei analog zu der Bildung der Faserschichten 9, 9' durch gegenläufiges Wickeln von Faserbündeln 14, 14' gebildet, wobei in Fig. 5 die Wicklung des Faserbündels 14 zu der Faserschicht 13 angedeutet ist.

Die Faserbündel 14 werden dabei in einem Winkel y und die Faserbündel 14' in einem Winkel -γ auf die Dämpfungsfaserschicht 11 aufgewickelt, der größer ist als der Winkel α und beispielsweise ca. ±65° betragen kann. In gleicher Weise wird auf die erzeugte Kreuzverbundschicht 12 eine weitere Dämpfungsfaserschicht 15 und auf diese wiederum eine weitere Kreuzverbundschicht 16 gewickelt, die in Fig. 6 dargestellt sind.

Die Kreuzverbundschichten 19, 12 und 16 sowie die Dämpfungsfaserschichten 11 und 15 bilden zusammen eine radial innenliegende Verbindungsschicht 17, auf die eine radial außenliegende Funktionsschicht 18 aufgebracht wird. Die in Fig. 6 durch eine gestrichelte Linie 20 voneinander getrennt dargestellten Verbindungs- und Funktionsschichten 17, 18 bilden zusammen eine Bezugsschicht 23 der Walze.

Die Funktionsschicht 18 kann dabei in ähnlicher Weise wie die Verbindungsschicht 17 ausgebildet sein, d.h. aus mehreren Dämpfungsfaserschichten und Kreuzverbundschichten bestehen. Es ist jedoch auch möglich, daß die Funktionsschicht 18 in konventioneller Weise, beispielsweise aus einem Matrixmaterial 21 mit darin eingebetteten Fasern 22 in Form einer reinen Kreuzwicklung oder von Faservliesen ausgebildet ist. Zusätzlich können sowohl in der Funktionsschicht 18 als auch in der Verbindungsschicht 17 weitere Füllstoffe vorgesehen sein.

Es ist generell auch denkbar, daß die Funktionsschicht 17 im wesentlichen aus reinem Matrixmaterial 21 besteht, um eine hohe Elastizität der Funktionsschicht zu erhalten.

Durch die extrem flach gewickelten Dämpfungsfaserschichten 11, 15 wird das Auftreten von Barrings verhindert. Eine auf die Außenseite der Bezugsschicht 23 wirkende Druckkraft führt aufgrund der flachen Ausrichtung der Faserbündel 10 zu einer Torsion der Dämpfungsfaserschichten 11 und 15. Durch die gegengleiche Wicklungen der durch die relativ dicke Kreuzverbundschicht voneinander getrennten Dämpfungsfaserschichten 11 und 15 wirken auf diese die Torsionskräfte in entgegengesetzte Richtungen, so daß die auf die Verbindungsschicht 17 wirkende resultierende Torsionskraft im wesentlichen kompensiert und die Oberfläche der Bezugsschicht 23 von der Torsion im wesentlichen unberührt bleibt.

Die im Betrieb auftretenden Druckbelastungen können somit bei einer erfindungsgemäß ausgebildeten Walze von den Dämpfungsfaserschichten 11, 15 aufgefangen und so in Torsionskräfte umgewandelt werden, daß das Auftreten von Barrings vermieden wird.

### Bezugszeichenliste

- 1: Fasern
- 2: Fasern
- 3: Sammeleinheit
- 4, 4': Faserbündel
- 5: Imprägniervorrichtung
- 6: Matrixmaterial
- 7: Walzenkern
- 8: Längsachse
- 9, 9': Faserschichten
- 10: Faserbündel
- 11: Dämpfungsfaserschicht
- 12: Kreuzverbundschicht
- 13, 13': Faserschichten
- 14, 14': Faserbündel
- 15: Dämpfungsfaserschicht
- 16: Kreuzverbundschicht
- 17: Verbindungsschicht
- 18: Funktionsschicht
- 19: Kreuzverbundschicht
- 20: gestrichelte Linie
- 21: Matrixmaterial
- 22: Fasern
- 23: Bezugsschicht

## Patentansprüche

1. Verfahren zum Herstellen einer elastischen Walze mit einem insbesondere aus Metall bestehenden harten Walzenkern und einer elastischen Bezugsschicht, bei dem zum Bilden der Bezugsschicht zumindest ein aus einer Vielzahl von Fasern bestehendes Faserbündel zum Bilden übereinanderliegender Faserschichten auf den Walzenkern gewickelt wird, wobei die Wickelrichtung der Fasern im wesentlichen parallel zueinander und schräg zur Umfangsrichtung des Walzenkerns verläuft,
**dadurch gekennzeichnet,**
**daß** zur Bildung einer Kreuzverbundschicht zumindest zwei übereinanderliegende Faserschichten alternierend gegengleich gewickelt werden, d.h. daß die Winkellagen der Faserbündel zweier gegengleich gewickelter Faserschichten zur Längsachse der Walze symmetrisch zur Querschnittsfläche der Walze sind,
**daß** auf die Kreuzverbundschicht eine Dämpfungsfaserschicht mit Faserbündeln einer einheitlichen Winkellage gewickelt wird, wobei die Winkellage dieser Faserbündel wesentlich flacher ist als die Winkellagen der Faserbündel der Kreuzverbundschicht,
und **daß** auf die Dämpfungsfaserschicht wiederum eine Kreuzverbundschicht gewickelt wird.

2. Verfahren nach Anspruch 1,
**dadurch gekennzeichnet,**
**daß** zur Bildung jeweils einer der Faserschichten der Kreuzverbundschichten das Faserbündel mehrlagig mit einer im wesentlichen einheitlichen Winkellage auf den Walzenkern gewickelt wird und/ oder
**daß** zur Bildung der Dämpfungsfaserschicht das Faserbündel einlagig auf den Walzenkern gewickelt wird und/oder
**daß** unterschiedliche Kreuzverbundschichten mit betragsmäßig unterschiedlichen Winkellagen gewickelt werden.

3. Verfahren nach einem der vorhergehenden Ansprüche,
**dadurch gekennzeichnet,**
**daß** mehrere Kreuzverbundschichten und Dämpfungsfaserschichten übereinander gewickelt werden, wobei jeweils auf eine Kreuzverbundschicht eine Dämpfungsfaserschicht folgt, insbesondere daß als radial äußerste Schicht eine Kreuzverbundschicht gewickelt wird.

4. Verfahren nach einem der vorhergehenden Ansprüche,
**dadurch gekennzeichnet,**
**daß** die Faserbündel zweier aufeinanderfolgender Dämpfungsfaserschichten gegengleich gewickelt werden und/oder
**daß** die Dämpfungsfaserschichten mit einer wesentlich kleineren radialen Dicke gewickelt werden als die Kreuzverbundschichten und/oder
**daß** radial außenliegende Kreuzverbundschichten mit einer steileren Winkellage gewickelt werden als radial innenliegende Kreuzverbundschichten.

5. Verfahren nach einem der vorhergehenden Ansprüche,
**dadurch gekennzeichnet,**
**daß** die Kreuzverbundschichten mit Winkellagen von ca. ±40° bis ca. ±80° gewickelt werden und/oder
**daß** die Dämpfungsfaserschichten mit einer Winkellage von ca. 3° bis ca. 12° oder von ca. -3° bis ca. - 12°, insbesondere von ca. 8° oder von ca. -8° gewickelt werden und/oder
**daß** die Dämpfungsfaserschichten mit betragsmäßig im wesentlichen gleichen Winkellagen gewickelt werden.

6. Verfahren nach einem der vorhergehenden Ansprüche,
**dadurch gekennzeichnet,**
**daß** zum Bilden der Bezugsschicht zunächst eine radial innenliegende Verbindungsschicht auf den Walzenkern und anschließend eine radial außenliegende Funktionsschicht auf die Verbindungsschicht aufgebracht wird, insbesondere daß zum Bilden der Verbindungsschicht und/oder der Funktionsschicht Kreuzverbundschichten und Dämpfungsfaserschichten auf den Walzenkern gewickelt werden.

7. Verfahren nach einem der vorhergehenden Ansprüche,
**dadurch gekennzeichnet,**
**daß** als Fasern Kohle- und/oder Metall- und/oder Glas- und/oder Aramidfasern oder Mischungen aus diesen Fasermaterialien verwendet werden und/oder
**daß** die Faserbündel durch Faserrovings gebildet werden, wobei ein Roving jeweils aus einer Vielzahl von nebeneinanderliegenden Fasern der gleichen Art besteht.

8. Verfahren nach einem der vorhergehenden Ansprüche,
**dadurch gekennzeichnet,**
**daß** die Fasern vor dem Aufwickeln auf den Walzenkern mit einem weichen Matrixmaterial, insbesondere mit einer Harz/Härter-Kombination umgeben werden, insbesondere durch ein Harz/ Härter-Bad gezogen werden, oder
**daß** die Fasern im wesentlichen trocken auf den Walzenkern aufgewickelt werden und während oder nach dem Aufwickeln mit einem weichen Matrixmaterial, insbesondere mit einer Harz/Härter-Kombination beaufschlagt, insbesondere vollständig in das Matrixmaterial eingebettet werden.

9. Walze, insbesondere zum Glätten von Papierbahnen, mit einem insbesondere aus Metall bestehenden harten Walzenkern (7), der an seiner Außenseite mit einer elastischen Bezugsschicht (23) versehen ist, die eine Vielzahl von radial übereinanderliegenden, aus einem weichen Matrixmaterial (6, 21) mit darin eingebetteten Fasern (1, 2) bestehenden Faserschichten umfaßt, insbesondere hergestellt gemäß dem Verfahren nach einem der vorhergehenden Ansprüche,
**dadurch gekennzeichnet,**
**daß** die Fasern (1, 2) der Faserschichten (9, 9', 11, 13, 13', 15) jeweils schräg zur Längsachse (8) des Walzenkerns (7) und im wesentlichen parallel zueinander verlaufen,
**daß** jeweils zumindest zwei übereinanderliegende Faserschichten (9, 9', 11, 13, 13') eine Kreuzverbundschicht (19, 16, 12) bilden, wobei die Fasern (1, 2; 4, 4', 14, 14') der einzelnen Faserschichten jeweils alternierend gegengleich verlaufen, d.h. daß die Winkellagen (α, γ) der Fasern (1, 2; 4, 4', 14, 14') zur Längsachse (8) des Walzenkerns (7) symmetrisch zur Querschnittsfläche der Walze sind,
**daß** die Bezugsschicht (23) zumindest zwei Kreuzverbundschichten (19, 12, 16) umfaßt,
und **daß** zwischen den Kreuzverbundschichten (19, 12, 16) eine Dämpfungsfaserschicht (11, 15) mit Fasern (1, 2; 10) einer einheitlichen Winkellage (β) vorgesehen ist, wobei die Winkellage (β) dieser Fasern (1, 2; 10) wesentlich flacher ist als die Winkellagen (α, γ) der Fasern (1, 2; 4, 4', 14, 14') der Kreuzverbundschichten (19, 12, 16).

10. Walze nach Anspruch 9,
**dadurch gekennzeichnet,**
**daß** die Faserschichten (9, 9', 13, 13') der Kreuzverbundschichten (19, 12, 16) jeweils mehrlagig ausgebildet sind, d.h. jeweils mehrere übereinander gewickelte Lagen von Fasern (1, 2; 4, 4', 14, 14') umfassen, wobei die Fasern (1, 2; 4, 4', 14, 14') einer Faserschicht (9, 9', 13, 13') jeweils eine im wesentlichen einheitliche Winkellage (α, -α, γ, -γ) besitzen.

11. Walze nach Anspruch 9 oder 10,
**dadurch gekennzeichnet,**
**daß** die Dämpfungsfaserschicht (11, 15) einlagig ausgebildet ist und/oder
**daß** für unterschiedliche Kreuzverbundschichten (19, 12, 16) die Winkellagen (α, γ) der Fasern (1, 2, 4, 4', 14, 14') betragsmäßig unterschiedlich sind und/oder
**daß** die Bezugsschicht (23) zumindest zwei, insbesondere drei Kreuzverbundschichten (19, 12, 16) und zumindest zwei Dämpfungsfaserschichten (11, 15) umfaßt.

12. Walze nach einem der Ansprüche 9 bis 11,
**dadurch gekennzeichnet,**
**daß** die Außenseite der Bezugsschicht (23) durch eine Kreuzverbundschicht gebildet ist und/oder
**daß** die Fasern (1, 2; 10) zweier aufeinanderfolgender Dämpfungsfaserschichten (11, 15) gegengleich gewickelt sind und/oder
**daß** die radiale Dicke der Dämpfungsfaserschichten (11, 15) wesentlichen kleiner ist als die radiale Dicke der Kreuzverbundschichten (19, 12, 16).

13. Walze nach einem der Ansprüche 9 bis 12,
**dadurch gekennzeichnet,**
**daß** die Dämpfungsfaserschichten (11, 15) eine radiale Dicke von ca. 0,1 mm bis ca. 1 mm, bevorzugt von ca. 0,25 mm bis ca. 0,6 mm besitzen und/oder
**daß** die Kreuzverbundschichten (19, 12, 16) eine radiale Dicke von ca. 1, 5 mm bis ca. 3 mm, bevorzugt von ca. 2 mm besitzen und/oder
**daß** die Winkellagen (γ) der Fasern (1, 2; 14, 14') radial außenliegender Kreuzverbundschichten (12) steiler sind als die Winkellagen (α) der Fasern (1, 2; 4, 4') radial innenliegender Kreuzverbundschichten ( 19).

14. Walze nach einem der Ansprüche 9 bis 13,
**dadurch gekennzeichnet,**
**daß** die Winkellagen (α, γ) der Kreuzverbundschichten (19, 12, 16) ca. ±40° bis ca. ±80° betragen und/oder
**daß** die Winkellagen (β) der Dämpfungsfaserschichten (11, 15) ca. 3° bis 12° oder ca. -3° bis -12°, insbesondere ca. 8° oder -8° betragen und/ oder
**daß** die Winkellagen (β) der Dämpfungsfaserschichten (11, 15) betragsmäßig im wesentlichen gleich groß sind.

15. Walze nach einem der Ansprüche 9 bis 14,
**dadurch gekennzeichnet,**
**daß** die Bezugsschicht (23) eine radial außenliegende Funktionsschicht (18) und eine radial innenliegende Verbindungsschicht (17) zum Verbinden der Funktionsschicht (18) mit dem Walzenkern (7) umfaßt, insbesondere daß die Verbindungsschicht (17) und/oder die Funktionsschicht (18) Kreuzverbundschichten (19, 12, 16) und Dämpfungsfaserschichten (11, 15) umfassen.

16. Walze nach einem der Ansprüche 9 bis 15,
**dadurch gekennzeichnet,**
**daß** das Matrixmaterial (6, 21) ein Kunststoff, insbesondere ein Duroplast oder ein Thermoplast ist und/oder
**daß** das Matrixmaterial (6, 21) aus einer Harz/Härter-Kombination besteht.

17. Walze nach einem der Ansprüche 9 bis 16,
**dadurch gekennzeichnet,**
**daß** die Fasern (1, 2) zu Faserbündel (4, 4', 10, 14, 14') oder Faserrovings zusammengefaßt sind, wobei ein Roving jeweils aus einer Anzahl von nebeneinanderliegenden Fasern (1, 2) der gleichen Art besteht und/oder
**daß** die Fasern (1, 2) als Glas- und/oder Kohle- und/oder Metall- und/oder Aramidfasern und/oder aus Mischungen dieser Fasermaterialien ausgebildet sind.

18. Walze nach einem der Ansprüche 9 bis 17,
**dadurch gekennzeichnet,**
**daß** der Fasergehalt der Verbindungsschicht (17) ca. 40 bis 70 Vol.-%, insbesondere ca. 50 bis 60 Vol.-% beträgt und/oder
**daß** der Fasergehalt der Funktionsschicht (18) ca. 5 bis 30 Vol.-%, insbesondere ca. 8 bis 20 Vol.-% beträgt und/oder
**daß** die Fasern (1, 2, 22) der Funktionsschicht (18) und/oder der Verbindungsschicht (17) eine höhere Wärmeleitfähigkeit besitzen als das Matrixmaterial (6, 21), in das sie eingebettet sind.

## Claims

1. A method of manufacturing a resilient roll comprising a hard roll core, in particular a hard roll core consisting of metal, and a resilient covering layer, in which, in order to form the covering layer, at least one fibre bundle consisting of a plurality of fibres is wound onto the roll core to form fibre layers lying on top of one another, with the winding direction of the fibres extending substantially parallel to one another and obliquely to the peripheral direction of the roll core,
**characterised in that**,
for the forming of a cross-wound composite layer, at least two fibre layers lying on top of one another are wound altnernatingly with mirror symmetry, i.e. **in that** the angular positions of the fibre bundles of two fibre layers wound with mirror symmetry to the longitudinal axis of the roll are symmetrical to the cross-sectional area of the roll;
**in that** a damping fibre layer with fibre bundles of a uniform angular position is wound onto the cross-wound composite layer, with the angular position of these fibre bundles being substantially shallower than the angular positions of the fibre bundles of the cross-wound composite layer;
and **in that** a cross-wound composite layer is in turn wound onto the damping fibre layer.

2. A method in accordance with claim 1, **characterised**
**in that**, for the forming of each of the fibre layers of the cross-wound composite layer, the fibre bundle is wound onto the roll core with a substantially uniform angular position in a plurality of layers; and/or
**in that**, for the forming of the damping fibre layer, the fibre bundle is wound in a single layer onto the roll core; and/or
**in that** different cross-wound composite layers are wound with angular positions different in magnitude.

3. A method in accordance with any one of the preceding claims, **characterised in that** a plurality of cross-wound composite layers and damping fibre layers are wound on top of one another, with each cross-wound composite layer being followed by a damping fibre layer; in particular **in that** a cross-wound composite layer is wound as the radially outermost layer.

4. A method in accordance with any one of the preceding claims, **characterised**
**in that** the fibre bundles of two successive damping fibre layers are wound with mirror symmetry; and/or
**in that** the damping fibre layers are wound with a much smaller radial thickness than the cross-wound composite layers; and/or
**in that** radially outwardly lying cross-wound composite layers are wound with a steeper angular position than radially inwardly lying cross-wound composite layers.

5. A method in accordance with any one of the preceding claims, **characterised**
**in that** the cross-wound composite layers are wound with angular positions of approximately ±40° to approximately ±80°; and/or
**in that** the damping fibre layers are wound with an angular position of approximately 3° up to approximately 12° or from approximately -3° to -12°, in particular from approximately 8° or from approximately -8°; and/or
**in that** the damping fibre layers are wound with substantially the same angular positions in magnitude.

6. A method in accordance with any one of the preceding claims, **characterised in that**, for the forming of the covering layer, a radially inwardly lying connection layer is first applied to the roll core and subsequently a radially outwardly lying functional layer is applied onto the connection layer, in particular **in that**, for the forming of the connection layer and/or of the functional layer, cross-wound composite layers and damping fibre layers are wound onto the roll core.

7. A method in accordance with any one of the preceding claims, **characterised**
**in that** carbon fibres and/or metal fibres and/or glass fibres and/or aramid fibres or mixtures of these fibre materials are used as fibres; and/or
**in that** the fibre bundles are formed by fibre rovings, with a roving respectively consisting of a plurality of fibres of the same kind lying next to one another.

8. A method in accordance with any one of the preceding claims, **characterised**
**in that**, prior to being wound onto the roll core, the fibres are surrounded with a soft matrix material, in particular with a resin/hardener combination, and are in particular drawn through a resin/hardener bath; or
**in that** the fibres are wound onto the roll core substantially dry and are loaded with a soft matrix material, in particular with a resin/hardener combination, and are in particular completely embedded into the matrix material, during or after the winding on.

9. A roll, in particular for the smoothing of paper webs, comprising a hard roll core (7), which in particular consists of metal and which is provided at its outer side with a resilient covering layer (23) which includes a plurality of fibre layers lying radially on top of one another and consisting of a soft matrix material (6, 21) with fibres (1, 2) embedded therein, in particular manufactured in accordance with any one of the preceding claims,
**characterised in that**
the fibres (1, 2) of the fibre layers (9, 9', 11, 13, 13', 15) each extend obliquely to the longitudinal axis (8) of the roll core (7) and substantially parallel to one another;
at least two fibre layers (9, 9', 11, 13, 13') lying on top of one another respectively form one cross-wound composite layer (19, 16, 12), with the fibres (1, 2; 4, 4', 14, 14') of the individual fibre layers respectively extending alternatingly with mirror symmetry, i.e. **in that** the angular positions (α, γ) of the fibres (1, 2; 4, 4', 14, 14') to the longitudinal axis (8) of the roll core (7) are symmetrical with respect to the cross-sectional surface of the roll;
**in that** the covering layer (23) includes at least two cross-wound composite layers (19, 12, 16);
and **in that** a damping fibre layer (11, 15) with fibres (1, 2; 10) of a uniform angular position (β) is provided between the cross-wound composite layers (19, 12, 16), with the angular position (β) of these fibres (1, 2: 10) being substantially shallower than the angular positions (α, γ) of the fibres (1, 2; 4, 4', 14, 14') of the cross-wound composite layers (19, 12, 16).

10. A roll in accordance with claim 9, **characterised in that** the fibre layers (9, 9', 13, 13') of the cross-wound composite layers (19, 12, 16) are each made of a plurality of layers, i.e. each include a plurality of layers of fibres (1, 2; 4, 4', 14, 14') wound on top of one another, with the fibres (1, 2; 4, 4', 14, 14') of a fibre layer (9, 9', 13, 13') each having a substantially uniform angular position (α, -α, γ, -γ).

11. A roll in accordance with claim 9 or claim 10, **characterised**
**in that** the damping fibre layer (11, 15) is made in single ply; and/or
**in that** the angular positions (α, γ) of the fibres (1, 2, 4, 4', 14, 14') are different in magnitude for different cross-wound composite layers (19, 12, 16); and/or
**in that** the covering layer (23) includes at least two cross-wound composite layers (19, 12, 16), in particular three cross-wound composite layers (19, 12, 16) and at least two damping fibre layers (11, 15).

12. A roll in accordance with one of claims 9 to 11, **characterised**
**in that** the outer side of the covering layer (23) is formed by a cross-wound composite layer; and/or
**in that** the fibres (1, 2; 10) of two successive damping fibre layers (11, 15) are wound with mirror symmetry; and/or
**in that** the radial thickness of the damping fibre layers (11, 15) is substantially smaller than the radial thickness of the cross-wound composite layers (19, 12, 16).

13. A roll in accordance with one of claims 9 to 12, **characterised**
**in that** the damping fibre layers (11, 15) have a radial thickness of approximately 0.1 mm to approximately 1 mm, preferably from approximately 0.25 mm to approximately 0.6 mm; and/or
**in that** the cross-wound composite layers (19, 12, 16) have a radial thickness of approximately 1.5 mm to approximately 3 mm, preferably of approximately 2 mm; and/or
**in that** the angular positions (γ) of the fibres (1, 2; 14, 14') of radially outwardly lying cross-wound composite layers (12) are steeper than the angular positions (α) of the fibres (1, 2; 4, 4') of radially inwardly lying cross-wound composite layers (19).

14. A roll in accordance with one of claims 9 to 13, **characterised**
**in that** the angular positions (α, γ) of the cross-wound composite layers (19, 12, 16) amount to approx. ±40° up to approximately ±80°; and/or
**in that** the angular positions (β) of the damping fibre layers (11, 15) amount to approximately 3° to 12° or approximately -3° to -12°, in particular to approximately 8° or -8°; and/or
**in that** the angular positions (β) of the damping fibre layers (11, 15) are of substantially equal amount in magnitude.

15. A roll in accordance with one of claims 9 to 14, **characterised in that** the covering layer (23) includes a radially outwardly lying functional layer (18) and a radially inwardly lying connection layer (17) for the connection of the functional layer (18) to the roll core (7); in particular **in that** the connection layer (17) and/or the functional layer (18) include cross-wound composite layers (19, 12, 16) and damping fibre layers (11, 15).

16. A roll in accordance with one of claims 9 to 15, **characterised**
**in that** the matrix material (6, 21) is a plastic, in particular a thermosetting plastic or a thermoplastic; and/or
**in that** the matrix material (6, 21) consists of a resin/hardener combination.

17. A roll in accordance with one of claims 9 to 16, **characterised**
**in that** the fibres (1, 2) are collected into fibre bundles (4, 4', 10, 14. 14') or fibre rovings, with each roving consisting of a number of fibres (1, 2) of the same kind lying next to one another; and/or
**in that** the fibres (1, 2) are made of glass fibres and/or carbon fibres and/or metal fibres and/or aramid fibres and/or of mixtures of these fibre materials.

18. A roll in accordance with one of claims 9 to 17, **characterised**
**in that** the fibre content of the connection layer (17) amounts to approximately 40 to 70% by volume, in particular to approximately 50 to 60% by volume; and/or
**in that** the fibre content of the functional layer (18) amounts to approximately 5 to 30% by volume, in particular to approximately 8 to 20% by volume; and/or
**in that** the fibres (1, 2, 22) of the functional layer (18) and/or of the connection layer (17) have a higher thermal conductivity than the matrix material (6, 21) into which they are embedded.

## Revendications

1. Procédé destiné à la fabrication d'un rouleau élastique, comportant notamment un noyau de rouleau dur constitué de métal et une couche de revêtement élastique, dans lequel au moins un faisceau de fibres constitué d'une pluralité de fibres est enroulé sur le noyau de rouleau pour réaliser la couche de revêtement afin de former des couches de fibres superposées, la direction d'enroulement des fibres étant sensiblement parallèle, et s'étendant obliquement par rapport à la direction périphérique du noyau de rouleau,
**caractérisé en ce que**,
pour la formation d'une couche composite croisée, au moins deux couches de fibres superposées sont enroulées en alternance de façon diamétralement opposée, à savoir que les positions angulaires des faisceaux de fibres de deux couches de fibres enroulées diamétralement à l'opposé par rapport à l'axe longitudinal du rouleau sont symétriques par rapport à la surface en section transversale du rouleau,
**en ce qu'**une couche de fibres d'amortissement avec des faisceaux de fibres d'une position angulaire homogène est enroulée sur la couche composite croisée, la position angulaire de ces faisceaux de fibres étant nettement plus plate que les positions angulaires des faisceaux de fibres de la couche composite croisée,
et **en ce qu'**une couche composite croisée est à nouveau enroulée sur la couche de fibres d'amortissement.

2. Procédé selon la revendication 1,
**caractérisé en ce que,**
pour la formation d'une des couches de fibres respectives des couches composites croisées, le faisceau de fibres est enroulé en plusieurs couches sur le noyau de rouleau avec une position angulaire sensiblement homogène, et/ou
**en ce que**, pour la formation de la couche de fibres d'amortissement, le faisceau de fibres est enroulé en une seule couche sur le noyau de rouleau, et/ou
**en ce que** différentes couches composites croisées sont enroulées avec des positions angulaires différentes en valeur.

3. Procédé selon l'une quelconque des revendications précédentes,
**caractérisé en ce que**
plusieurs couches composites croisées et couches de fibres d'amortissement sont enroulées les unes sur les autres, une couche de fibres d'amortissement étant à chaque fois enroulée sur une couche composite croisée, notamment **en ce qu'**une couche composite croisée est enroulée en tant que couche radialement extérieure.

4. Procédé selon l'une quelconque des revendications précédentes,
**caractérisé en ce que**
les faisceaux de fibres de deux couches de fibres d'amortissement successives sont enroulées de façon diamétralement opposée, et/ou
**en ce que** les couches de fibres d'amortissement sont enroulées avec une épaisseur radiale nettement inférieure à celle des couches composites croisées, et/ou
**en ce que** des couches composites croisées situées radialement à l'extérieur sont enroulées avec une position angulaire plus raide que des couches composites croisées situées radialement à l'intérieur.

5. Procédé selon l'une quelconque des revendications précédentes,
**caractérisé en ce que**
les couches composites croisées sont enroulées avec des positions angulaires d'environ ± 40° à ± 80° environ, et/ou
**en ce que** les couches de fibres d'amortissement sont enroulées avec une position angulaire d'environ 3° à 12° environ, ou d'environ - 3° à - 12° environ, notamment d'environ 8° ou d'environ - 8°, et/ou
**en ce que** les couches de fibres d'amortissement sont enroulées avec des positions angulaires sensiblement égales en valeur.

6. Procédé selon l'une quelconque des revendications précédentes,
**caractérisé en ce que**,
pour la formation de la couche de revêtement, une couche de liaison située radialement à l'intérieur est dans un premier temps appliquée sur le noyau de rouleau, et une couche de fonction située radialement à l'extérieur étant ensuite appliquée sur la couche de liaison, notamment **en ce que** des couches composites croisées et des couches de fibres d'amortissement sont enroulées sur le noyau de rouleau pour la formation de la couche de liaison et/ou de la couche de fonction.

7. Procédé selon l'une quelconque des revendications précédentes,
**caractérisé en ce que**
des fibres de carbone et/ou de métal et/ou de verre et/ou d'aramide ou des mélanges de ces matières fibreuses sont utilisés en tant que fibres, et/ou
**en ce que** les faisceaux de fibres sont constitués de stratifils de fibres, un stratifil étant constitué d'une pluralité de fibres de même nature situées les unes à côté des autres.

8. Procédé selon l'une quelconque des revendications précédentes,
**caractérisé en ce que**,
avant l'enroulement sur le noyau de rouleau, les fibres sont entourées d'un matériau de matrice souple, notamment d'une combinaison de résine / durcisseur, notamment tirées à travers un bain de résine / durcisseur, ou
**en ce que** les fibres sont enroulées à l'état sensiblement sec sur le noyau de rouleau, et sont revêtues d'un matériau de matrice souple pendant ou après l'enroulement, notamment d'une combinaison de résine / durcisseur, notamment sont entièrement enrobées dans le matériau de matrice.

9. Rouleau destiné notamment au lissage de bandes de papier, comportant un noyau de rouleau dur (7) constitué notamment de métal, dont la face extérieure est munie d'une couche de revêtement élastique (23), qui présente une pluralité de couches de fibres radialement superposées en un matériau de matrice souple (6, 21) dans lequel sont enrobées des fibres (1, 2), lequel rouleau est notamment fabriqué selon le procédé suivant l'une quelconque des revendications précédentes,
**caractérisé en ce que**
les fibres (1, 2) respectives des couches de fibres (9, 9', 11, 13, 13', 15) s'étendent obliquement par rapport à l'axe longitudinal (8) du noyau de rouleau (7), et pour l'essentiel parallèlement les unes par rapport aux autres,
**en ce que** deux couches de fibres (9, 9', 11, 13, 13') respectives superposées forment une couche composite croisée (19, 16, 12), les fibres (1, 2 ; 4, 4', 14, 14') respectives des différentes couches de fibres s'étendant en alternance de façon diamétralement opposée, à savoir que, par rapport à l'axe longitudinal (8) du noyau de rouleau (7), les positions angulaires (α, γ) des fibres (1, 2 ; 4, 4', 14, 14') sont symétriques par rapport à la surface en section transversale du rouleau,
**en ce que** la couche de revêtement (23) comporte au moins deux couches composites croisées (19, 12, 16),
et **en ce qu'**une couche de fibres d'amortissement (11, 15) avec des fibres (1, 2 ; 10) d'une position angulaire (β) homogène est prévue entre les couches composites croisées (19, 12, 16), la position angulaire (β) de ces fibres (1, 2 ; 10) étant nettement plus plate que les positions angulaires (α, γ) des fibres (1, 2 ; 4, 4' , 14, 14') des couches composites croisées (19, 12, 16).

10. Rouleau selon la revendication 9,
**caractérisé en ce que**
les couches de fibres (9, 9', 13, 13') des couches composites croisées (19, 12, 16) sont respectivement constituées de plusieurs couches, à savoir comportent respectivement plusieurs couches de fibres (1, 2 ; 4, 4', 14, 14') enroulées les unes sur les autres, les fibres (1, 2 ; 4, 4', 14, 14') d'une couche de fibres (9, 9', 13, 13') ayant respectivement une position angulaire (α, - α, γ, - γ) sensiblement homogène.

11. Rouleau selon la revendication 9 ou 10,
**caractérisé en ce que**
la couche de fibres d'amortissement (11, 15) est constituée d'une seule couche, et/ou,
**en ce que** pour différentes couches composites croisées (19, 12, 16), les positions angulaires (α, γ) des fibres (1, 2, 4, 4', 14, 14') sont différentes en valeur, et/ou
**en ce que** la couche de revêtement (23) comporte au moins deux couches composites croisées (19, 12, 16), notamment trois, et au moins deux couches de fibres d'amortissement (11, 15).

12. Rouleau selon l'une quelconque des revendications 9 à 11,
**caractérisé en ce que**
la face extérieure de la couche de revêtement (23) est constituée d'une couche composite croisée, et/ou
**en ce que** les fibres (1, 2 ; 10) de deux couches de fibres d'amortissement (11, 15) successives sont enroulées de façon diamétralement opposée, et/ou
**en ce que** l'épaisseur radiale des couches de fibres d'amortissement (11, 15) est nettement inférieure à l'épaisseur radiale des couches composites croisées (19, 12, 16).

13. Rouleau selon l'une quelconque des revendications 9 à 12,
**caractérisé en ce que**
les couches de fibres d'amortissement (11, 15) ont une épaisseur radiale d'environ 0,1 mm à environ 1 mm, de préférence d'environ 0,25 mm à 0,6 mm environ, et/ou
**en ce que** les couches composites croisées (19, 12, 16) ont une épaisseur radiale d'environ 1,5 mm à 3 mm environ, de préférence d'environ 2 mm, et/ou
**en ce que** les positions angulaires (γ) des fibres (1, 2 ; 14, 14') de couches composites croisées (12) situées radialement à l'extérieur sont plus raides que les positions angulaires (α) des fibres (1, 2 ; 4, 4') de couches composites croisées (19) situées radialement à l'intérieur.

14. Rouleau selon l'une quelconque des revendications 9 à 13,
**caractérisé en ce que**
les positions angulaires (α, γ) des couches composites croisées (19, 12, 16) sont d'environ ± 40° à ± 80° environ, et/ou
**en ce que** les positions angulaires (β) des couches de fibres d'amortissement (11, 15) sont d'environ 3° à 12°, ou d'environ - 3° à - 12°, notamment d'environ 8° ou - 8°, et/ou
**en ce que** les positions angulaires (β) des couches de fibres d'amortissement (11, 15) sont sensiblement égales en valeur.

15. Rouleau selon l'une quelconque des revendications 9 à 14,
**caractérisé en ce que**
la couche de revêtement (23) comporte une couche de fonction (18) située radialement à l'extérieur, et une couche de liaison (17) située radialement à l'intérieur destinée à relier la couche de fonction (18) au noyau de rouleau (7), notamment **en ce que** la couche de liaison (17) et/ou la couche de fonction (18) comportent des couches composites croisées (19, 12, 16) et des couches de fibres d'amortissement (11, 15).

16. Rouleau selon l'une quelconque des revendications 9 à 15,
**caractérisé en ce que**
le matériau de matrice (6, 21) est une matière plastique, notamment une résine thermodurcissable ou une matière thermoplastique, et/ou
**en ce que** le matériau de la matrice (6, 21) est constitué d'une combinaison de résine / durcisseur.

17. Rouleau selon l'une quelconque des revendications 9 à 16,
**caractérisé en ce que**
les fibres (1, 2) sont concentrées en faisceaux de fibres (4, 4', 10, 14, 14') ou en stratifils de fibres, un stratifil étant à chaque fois constitué d'un nombre de fibres (1, 2) de même nature situées les unes à côté des autres, et/ou
**en ce que** les fibres (1, 2) sont constituées de fibres de verre et/ou de carbone et/ou de métal et/ou d'aramide et/ou de mélanges de ces matières fibreuses.

18. Rouleau selon l'une quelconque des revendications 9 à 17,
**caractérisé en ce que**
la teneur en fibres de la couche de liaison (17) est de l'ordre de 40 à 70 % en volume, notamment de l'ordre de 50 à 60 % en volume, et/ou
**en ce que** la teneur en fibres de la couche de fonction (18) est de l'ordre de 5 à 30 % en volume, notamment de l'ordre de 8 à 20 % en volume, et/ou
**en ce que** les fibres (1, 2, 22) de la couche de fonction (18) et/ou de la couche de liaison (17) ont une conductibilité thermique plus élevée que le matériau de matrice (6, 21), dans lequel elles sont enrobées.
